(19) Europäisches Patentamt
European Patent Office
Office européen des brevets

(11) **EP 4 510 243 A1**

(12) **EUROPEAN PATENT APPLICATION**

(43) Date of publication:
**19.02.2025 Bulletin 2025/08**

(21) Application number: **24194505.4**

(22) Date of filing: **14.08.2024**

(51) International Patent Classification (IPC):
**H01M 4/62** $^{(2006.01)}$    **H01M 10/42** $^{(2006.01)}$

(52) Cooperative Patent Classification (CPC):
**H01M 4/62; H01M 10/4235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023   JP 2023131857**
**25.04.2024   KR 20240055545**

(71) Applicant: **SAMSUNG SDI CO., LTD.**
**Giheung-gu**
**Yongin-si, Gyeonggi-do**
**17084 (KR)**

(72) Inventors:
• **INUI, Kunihiro**
**Yokohama-shi, 230-0027 (JP)**
• **BAEK, Jinseok**
**Yokohama-shi, 230-0027 (JP)**
• **FUJITA, Takayoshi**
**Yokohama-shi, 230-0027 (JP)**

(74) Representative: **Michalski Hüttermann & Partner**
**Patentanwälte mbB**
**Kaistraße 16A**
**40221 Düsseldorf (DE)**

(54) **COMPOSITES PARTICLES FOR NON-AQUEOUS ELECTROLYTE RECHARGEABLE BATTERIES, METHODS OF PREPARING THE SAME, POSITIVE ELECTRODES, AND NON-AQUEOUS ELECTROLYTE RECHARGEABLE BATTERIES**

(57)    According to various examples, by including a sufficient amount of a flame retardant component in addition to metal hydroxide, an increase in the internal temperature of the battery may be reduced or suppressed, and deterioration of the cycle characteristics of the battery may be reduced or suppressed. The flame retardant component includes a phosphorus element, a phosphorus element and a boron element, or a phosphorus element and a bromine element, and a content of phosphorus element, a sum of the contents of a phosphorus element and a boron element or a sum of the contents of a phosphorus element and a bromine element is greater than or equal to about 18 wt% and less than or equal to about 30 wt% based on 100 wt% of the composite particles for nonaqueous electrolyte rechargeable battery.

FIG. 1

EP 4 510 243 A1

**Description**

**Related Applications**

This application claims the benefit of priority to Japanese Patent Application No. 2023-131857 filed in the Japan Patent Office on August 14, 2023, and Korean Patent Application No. 1 0-2024-0055545 filed in the Korean Intellectual Property Office on April 25, 2024, the entire contents of which are incorporated herein by reference.

**BACKGROUND**

**1. Field**

Examples of this disclosure relate to composite particles for non-aqueous electrolyte rechargeable batteries and non-aqueous electrolyte rechargeable batteries including the composite particles.

**2. Description of the Related Art**

Non-aqueous electrolyte rechargeable batteries including, e.g., rechargeable lithium ion batteries, are widely used as power sources for smart phones, notebook computers, and the like, as well as for large-sized batteries such as, e.g., for vehicles.

On the other hand, the rechargeable lithium ion batteries have advantages of high energy density, but since rechargeable lithium ion batteries use non-aqueous electrolytes, sufficient measures are required for safety. Also, with the recent increase in the size of batteries, securing safety is a notable aspect.

For example, when a rechargeable lithium ion battery is placed in a high-temperature environment, there is a possibility that the positive electrode of the rechargeable lithium ion battery generates heat, or heat is generated due to an oxidative decomposition reaction of the electrolyte caused by oxygen radicals generated from the positive electrode, causing an increase in the internal temperature of the battery.

If the internal temperature of the battery becomes substantially high due to such causes, a short circuit due to shrinkage of the separator provided in the rechargeable lithium ion battery may occur, and there is a risk that the internal temperature of the battery may gradually rise.

Accordingly, as a method of ensuring safety by reducing or suppressing an increase in an internal temperature of a rechargeable lithium ion battery, it has been proposed to incorporate a binder including a radical scavenging agent such as phosphate ester with radical trapping ability (Patent Document 1, Japanese Patent Publication No. 2011-159484) or metal hydroxide particles with endothermic properties (Patent Document 2, Japanese Patent Publication No. 2016-162528 and Patent Document 3, Japanese Patent Publication No. 2011-258481).

**SUMMARY**

However, an internal temperature increase of the battery may not be sufficiently reduced or suppressed simply by incorporating the radical scavenger described in Patent Document 1 and the metal hydroxide particles described in Patent Documents 2 and 3 alone into a non-aqueous electrolyte rechargeable battery such as a rechargeable lithium ion battery. In addition, there is a challenge such as deterioration of cycle characteristics (discharge capacity retention rate) when charge and discharge cycles are repeated by including metal hydroxide particles or radical scavengers.

As a result, the example embodiments of the present disclosure address the above-mentioned challenges and achieve a further effect of reducing or suppressing the increase in internal temperature by including a metal hydroxide and a flame retardant component, and adjusting amounts of a specific element constituting the flame retardant component within a predetermined range.

That is, example embodiments include the following configurations.

Composite particles for a non-aqueous electrolyte rechargeable battery according to some example embodiments include a metal hydroxide and a flame retardant component,

wherein the flame retardant component contains a phosphorus element, a phosphorus element and a boron element, or a phosphorus element and a bromine element, and
a content of the phosphorus element, a sum of the contents of the phosphorus element and the boron element, or a sum of the contents of the phosphorus element and the bromine element is greater than or equal to about 18 wt% and less than or equal to about 30 wt% based on 100 wt% of the composite particles for non-aqueous electrolyte rechargeable battery.

An amount of desorbed $P_2$ (MS1) of the composite particles from about 80 °C to about 1400 °C as determined by thermal desorption gas mass spectrometry (TDS-MS) may be greater than or equal to about $600 \times 10^{-6}$ mol/g and less than or equal to about $2000 \times 10^{-6}$ mol/g, and an amount of desorbed $H_2O$ (MS2) from about 80 °C to about 200 °C by TDS-MS of the composite particle may be greater than or equal to about $50 \times 10^{-6}$ mol/g and less than or equal to about $1000 \times 10^{-6}$ mol/g.

An amount of desorbed $CH_4$ (MS3) from about 80 °C to about 1400 °C as determined by TDS-MS of the composite particle may be greater than or equal to about $30 \times 10^{-6}$ mol/g and less than or equal to about $400 \times 10^{-6}$ mol/g, an amount of desorbed CHsOH (MS4) from about 80 °C to about 1400 °C as determined by TDS-MS of the composite particle may be greater than or equal to about $500 \times 10^{-6}$ mol/g and less than or equal to about $2500 \times 10^{-6}$ mol/g, and an amount of desorbed $C_6H_6$ (MS5) from about 80 °C to about 1400 °C as determined by TDS-MS of the composite particle may be greater than or equal to about $100 \times 10^{-6}$ mol/g and less than or equal to about $2500 \times 10^{-6}$ mol/g.

A ratio of the amounts of desorbed gases may satisfy Formula (1):

$$0.6 \leq (MS1/MS2) \leq 10.0 \quad \dots (1).$$

A Brunauer Emmett Teller (BET) specific surface area calculated by an adsorption isotherm measured by adsorbing nitrogen may be greater than or equal to about 8 $m^2$/g and less than or equal to about 80 $m^2$/g.

An integrated value of 50% ($D_{50}$) of the volume-based particle size distribution of the composite particles may be greater than or equal to about 0.05 $\mu$m and less than or equal to about 10 $\mu$m.

The metal hydroxide may contain at least one of aluminum hydroxide, pseudo-boehmite, boehmite, activated alumina, and kaolinite.

An aluminum element content as determined by inductively coupled plasma emission spectroscopy (ICP-AES) may be greater than or equal to about 5 wt% and less than or equal to about 30 wt%.

A positive electrode for a non-aqueous electrolyte rechargeable battery according to an example embodiment includes a positive electrode current collector and a positive electrode mixture layer on the positive electrode current collector,

wherein the positive electrode mixture layer includes a positive electrode active material and the aforementioned composite particles.

A non-aqueous electrolyte rechargeable battery according to an example embodiment includes a positive electrode, a negative electrode, a separator, and a non-aqueous electrolyte, wherein the positive electrode is the aforementioned positive electrode.

A method of preparing composite particles for a non-aqueous electrolyte rechargeable battery includes mixing metal hydroxide particles and a flame retardant and heating the metal hydroxide particles and the flame retardant to prepare the aforementioned composite particles.

According to the composite particles for non-aqueous electrolyte rechargeable batteries constructed according to the example embodiments, by including a sufficient amount of flame retardant component as well as metal hydroxide, an increase in the internal temperature of the battery may be reduced or suppressed, and deterioration of the cycle characteristics of the battery due to the inclusion of these substances may be reduced or suppressed.

**BRIEF DESCRIPTION OF THE DRAWINGS**

FIG. 1 is a graph showing cycle characteristics in Examples and Comparative Examples.
FIG. 2 is a graph showing the heat reduction or suppression effect in Examples and Comparative Examples.

**DETAILED DESCRIPTION**

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein is used to describe embodiments, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the particle diameter may be an average particle diameter and the average particle diameter may be measured by a method well known to those skilled in the art, for example, may be measured by a particle size analyzer, or may be measured by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or length of the long axis) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

Hereinafter, a configuration of a non-aqueous electrolyte rechargeable battery according to an example embodiment will be described.

1. Basic Configuration of Non-aqueous Electrolyte Rechargeable Battery

The non-aqueous electrolyte rechargeable battery according to this example embodiment is a rechargeable lithium ion battery that includes a positive electrode, a negative electrode, a separator, and a non-aqueous electrolyte.

The shape of the rechargeable lithium ion battery is not particularly limited, and may be, for example, cylindrical, square, laminate, or button.

1-1. Positive Electrode

The positive electrode includes a positive electrode current collector and a positive electrode mixture layer on the positive electrode current collector.

The positive electrode current collector may be or include any material as long as the material is a conductor, and is, for example, plate-shaped or thin, and may be made of aluminum, stainless steel, nickel coated steel, or the like.

The positive electrode mixture layer may include at least a positive electrode active material, and may further include a conductive agent and a positive electrode binder.

The positive electrode active material may be or include, for example, a transition metal oxide or a solid solution oxide including lithium, and is not particularly limited as long the material can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In addition, examples of the transition metal oxide including lithium may include Li·Co composite oxides such as $LiCoO_2$ and Li·Ni·Co-Mn-based composite oxides such as $LiNi_xCo_yMn_zO_2$, Li-Ni-based composite oxide such as $LiCoO_2$, Li·Ni·Co-Mn-based composite oxides such as $LiMn_2O_4$, and the like. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), or $LiMn_{1.5}Ni_{0.5}O_4$. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as the conductive agent increases the conductivity of the positive electrode. Examples of the conductive agent may include those including at least one of among carbon black, natural graphite, artificial graphite, fibrous carbon, and sheet-like carbon. Examples of the carbon black may include furnace black, channel black, thermal black, ketjen black, and acetylene black.

Examples of the fibrous carbon may include carbon nanotubes and carbon nanofibers, and examples of the sheet-like carbon include graphene and the like.

A content of the conductive agent in the positive electrode mixture layer is not particularly limited, but may be greater than or equal to about 0.1 wt% and less than or equal to about 5 wt%, greater than or equal to about 0.5 wt% and less than or equal to about 3 wt% based on the total amount of the positive electrode mixture layer, and when in any of the above ranges achieves both conductivity and battery capacity.

The positive electrode binder may include, for example, a fluoro-containing resin such as at least polyvinylidene fluoride, an ethylene-containing resin such as styrene-butadiene rubber, an ethylene-propylene diene terpolymer, an acrylonitrile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, etc.), nitrocellulose, and the like. The positive electrode binder may be or include any material capable of binding the positive electrode active material and the conductive agent onto the positive electrode current collector, and is not particularly limited.

1-2. Negative Electrode

The negative electrode includes a negative electrode current collector and a negative electrode mixture layer on the negative electrode current collector.

The negative electrode current collector may be or include any material as long as the material is a conductor, and may be plate-shaped or thin, and made of copper, stainless steel, nickel-plated steel, or the like.

The negative electrode mixture layer may include a negative electrode active material, and may further include a conductive agent and a negative electrode binder.

The negative electrode active material is not particularly limited as long as the material can electrochemically intercalate and deintercalate lithium ions, but, may be or include, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or oxides thereof and a graphite active material, particulates of silicon or tin, an alloy including silicon or tin as a base material), metallic lithium, and a titanium oxide compound such as $Li_4Ti_5O_{12}$, lithium nitride, and the like. As the negative electrode active material, one of the above examples may be used, or two or more types may be used in combination. On the other hand, oxides of silicon may be represented by $SiO_x$ ($0 < x \leq 2$).

The conductive agent is not particularly limited as long as the conductive agent increases the conductivity of the negative electrode, and for example, the same conductive agent as described in the section of the positive electrode may be used.

A content of the conductive agent in the negative electrode mixture layer is not particularly limited, but may be greater than or equal to about 0.1 wt% and less than or equal to about 5 wt%, or greater than or equal to about 0.5 wt% and less than or equal to about 3 wt% based on the total weight of the negative electrode mixture layer, and when in any of the above ranges achieves both conductivity and battery capacity.

The negative electrode binder may be capable of binding the negative electrode active material and the conductive agent on the negative electrode current collector, and is not particularly limited. The negative electrode binder may be or include, for example, at least one of polyvinylidene fluoride (PVDF), polytetrafluoroethylene (PTFE), polyacrylic acid (PAA), a styrene-butadiene-based copolymer (SBR), a metal salt of carboxymethyl cellulose (CMC), and the like. The binder may be used alone or may be used in mixture of two or more types.

1-3. Separator

The separator is not particularly limited, and any separator may be used as long as it is a separator for a rechargeable lithium ion battery. The separator may be or include at least one of a porous film, nonwoven fabric, or the like that exhibits improved, desired or advantageous high-rate discharge performance. The resin constituting the separator may be or include, for example, a polyolefin-based resin such as at least one of polyethylene, polypropylene, and the like, a polyester resin such as at least one of polyethylene terephthalate, polybutylene terephthalate, polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

The separator may further include a surface layer covering the surface of the porous film or non-woven fabric described above. The surface layer may include an adhesive for immobilizing the battery element by adhering to the electrode. Examples of the adhesive may include at least one of a vinylidene fluoride-hexafluoropropylene copolymer, an acid-modified product of vinylidene fluoride polymers, and a styrene-(meth)acrylic acid ester copolymer.

1-4. Non-aqueous Electrolyte

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as, e.g., at least one of propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including at least one of lithium (Li), sodium (Na), and potassium (K) such as at least one of $LiClO_4$, $LiBF_4$, $LiAsF_6$, $LiPF_6$, $LiPF_{6-x}(C_nF_{2n+1})_x$ [provided that 1<x<6 and n=1 or 2], LiSCN, LiBr, LiI, $Li_2SO_4$, $Li_2B_{10}Cl_{10}$, $NaClO_4$, NaI, NaSCN, NaBr, $KClO_4$, KSCN, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzo-ate, $(C_2H_5)_4N$-phthalate, lithium stearyl sulfonate, lithium octyl sulfonate, lithium dodecylbenzene sulfonate, and the like, and it is also possible to use these ionic compounds alone or in a mixture of two or more types. A concentration of the electrolyte salt may be the same as the concentration of a non-aqueous electrolyte used in a conventional rechargeable lithium ion battery, and is not particularly limited. In an example embodiment, it is desirable to use a non-aqueous electrolyte including the aforementioned lithium compound (electrolytic salt) at a concentration greater than or equal to about 0.8 mol/L and less than or equal to about 1.5 mol/L.

In examples, various additives may be added to the non-aqueous electrolyte. Examples of such additives may include, e.g., at least one of negative electrode-acting action additives, positive electrode-acting additives, ester additives, carbonate ester additives, sulfuric acid ester additives, phosphoric acid ester additives, boric acid ester additives, acid anhydride additives, and electrolyte additives. At least one of these may be added to the non-aqueous electrolyte, and a plurality of types of additives may be added.

2. Configuration of Non-aqueous Electrolyte Rechargeable Battery According to The Present Embodiment

Hereinafter, the characteristic configuration of the non-aqueous electrolyte rechargeable battery according to an example embodiment will be described.

In addition to the aforementioned components, the positive electrode mixture layer of the non-aqueous electrolyte rechargeable battery according to an example embodiment includes composite particles for non-aqueous electrolyte rechargeable batteries (also simply referred to as composite particles) that constitute a heat reducing or suppressing additive to reduce or suppress internal temperature increase of the battery.

These composite particles are made by at least heating a metal hydroxide capable of absorbing heat through an endothermic reaction and a flame retardant having a radical trapping ability to combine them. These composite particles are combined in a state in which the metal hydroxide and the flame retardant are mixed as uniformly as possible. For example, the composite particles are made by collecting a plurality of metal hydroxide particles with the flame retardant component derived from the above flame retardant included on a surface thereof and inside. Herein, the "composite" means, for example, that the flame retardant components are chemically bonded to each other through the functional groups (for example, hydroxyl and phosphoric acid groups, etc.) of the metal hydroxide particles included on the surface thereof and inside, thereby forming a plurality of particles into one agglomerate. The chemical bond herein includes not only covalent bonds but also various bonds such as ionic bonds, coordination bonds, and metallic bonds. The bonding state between particles can be confirmed by, for example, X-ray photoelectron spectroscopy.

The particle diameter of the composite particles may be such that the integrated value of 50% ($D_{50}$) of the volume-based particle size distribution may be greater than or equal to about 0.05 $\mu$m and less than or equal to about 10 $\mu$m. The $D_{50}$ of the composite particles may be greater than or equal to about 0.08 $\mu$m and less than or equal to about 9 $\mu$m, or greater than or equal to about 0.1 $\mu$m and less than or equal to about 8.5 $\mu$m.

The particle diameter of the composite particles can be controlled by the preparing conditions of the composite particles. For example, if the temperature for preparing composite particles is increased, or the stirring speed is increased, the particle diameter of the composite particles tends to become smaller. For example, it is possible to make the particle diameter of the composite particles smaller than the particle diameter of the metal hydroxide that is the starting material.

In addition, the BET specific surface area of the composite particles calculated by the adsorption isotherm measured by adsorbing nitrogen to the composite particles may be greater than or equal to about 8 $m^2$/g and less than or equal to about 80 $m^2$/g, greater than or equal to about 10 $m^2$/g and less than or equal to about 75 $m^2$/g, or greater than or equal to about 15 $m^2$/g and less than or equal to about 75 $m^2$/g.

The metal hydroxide is not particularly limited as long as the metal hydroxide is an endothermic material that can cause an endothermic reaction. Examples of the metal hydroxide may include aluminum hydroxide, pseudo-boehmite, boehmite, activated alumina, and kaolinite. These may be used alone, or two or more types may be used together.

The integrated value of 50% ($D_{50}$) of the volume-based particle size distribution of the metal hydroxide particles may be greater than or equal to about 10 nm and less than or equal to about 10 $\mu$m, greater than or equal to about 0.1 $\mu$m and less than or equal to about 8 $\mu$m, or greater than or equal to about 0.5 $\mu$m and less than or equal to about 5 $\mu$m.

A content of hydroxide particles in the composite particles may be in the range of greater than or equal to about 1 wt% and less than or equal to about 60 wt%, greater than or equal to about 5 wt% and less than or equal to about 50 wt%, or greater than or equal to about 10 wt% and less than or equal to about 40 wt% based on a total amount (100 wt%) of the composite particle.

The flame retardant may have a radical trapping ability to capture radicals such as oxygen radicals generated in the positive electrode mixture layer, and may include, for example, at least one of phosphoric acid, phosphoric acid ester, phosphonic acid, phosphonic acid ester, phosphinic acid, and phosphinic acid ester, which can form a functional group including a phosphorus (P) element by combining with the metal hydroxide. Further, the flame retardant may further include, for example, boronic acid or bromic acid.

Examples of phosphoric acid ester may include at least one of phenyl phosphate, diphenyl phosphate, and triphenyl phosphate.

Examples of phosphonic acid ester may include at least one of phenylphosphonic acid and methylphosphonic acid.

Examples of phosphinic acid ester may include methylphosphinic acid.

For the composite particles, a content of a P (phosphorus) element, a sum of the contents of a P (phosphorus) element and a B (boron) element, or a sum of the contents of a P (phosphorus) element and a Br (bromine) element measured by inductively coupled plasma emission spectroscopy (ICP-AES) may be greater than or equal to about 18 wt% and less than or equal to about 30 wt% based on a total amount (100 wt%) of the composite particle. The content of these elements or each sum of the contents of these elements may be greater than or equal to about 18 wt% and less than or equal to about 25 wt%.

The content of the P (phosphorus) element in the composite particles may be greater than or equal to about 5 wt% and less than or equal to about 30 wt%, or greater than or equal to about 8 wt% and less than or equal to about 30 wt%.

The content of B (boron) element in the composite particles may be 0, but may also be greater than or equal to about 1 wt% and less than or equal to about 25 wt%, or greater than or equal to about 5 wt% and less than or equal to about 15 wt%.

The content of the Br (bromine) element in the composite particles may be 0, but may also be greater than or equal to about 1 wt% and less than or equal to about 25 wt%, or greater than or equal to about 5 wt% and less than or equal to about 10 wt%.

The content of the Al (aluminum) element in the composite particles measured by ICP-AES may be 0, but may also be greater than or equal to about 1 wt% and less than or equal to about 30 wt%, greater than or equal to about 3 wt% and less than or equal to about 20 wt%, greater than or equal to about 5 wt% and less than or equal to about 30 wt%, or greater than or equal to about 5 wt% and less than or equal to about 15 wt%.

The composite particles may have amounts of various desorbed gases due to various modifying groups within the following ranges.

When the composite particles are heated from about 80 °C to about 1400 °C, an amount of desorbed $P_2$ gas (referred to as MS1) from the composite particles as measured using a thermal desorption gas mass spectrometry (TDS-MS) may be greater than or equal to about $600 \times 10^{-6}$ mol/g and less than or equal to about $2000 \times 10^{-6}$ mol/g, and when the composite particles are heated from about 80 °C to about 200 °C, an amount of desorbed $H_2O$ gas (referred to as MS2) from the composite particles as measured by TDS-MS may be greater than or equal to about $50 \times 10^{-6}$ mol/g and less than or equal to about $1000 \times 10^{-6}$ mol/g.

MS1 may be greater than or equal to about $620 \times 10^{-6}$ mol/g and less than or equal to about $1900 \times 10^{-6}$ mol/g, or greater than or equal to about $630 \times 10^{-6}$ mol/g and less than or equal to about $1800 \times 10^{-6}$ mol/g.

MS2 may be greater than or equal to about $100 \times 10^{-6}$ mol/g and less than or equal to about $950 \times 10^{-6}$ mol/g, or greater than or equal to about $200 \times 10^{-6}$ mol/g and less than or equal to about $900 \times 10^{-6}$ mol/g.

Moreover, a ratio (MS1/MS2) of the amounts of desorbed gases may be greater than or equal to about 0.6 and less than or equal to about 10.0, greater than or equal to about 0.7 and less than or equal to about 5.0, or greater than or equal to about 0.8 and less than or equal to about 4.0. By ensuring that the ratio (MS1/MS2) of the amounts of desorbed gases satisfies the above range, both an effect of reducing or suppressing the temperature increase resulting from increasing the content of the flame retardant component in the composite particles and the battery performance can be achieved with a better balance.

Increasing the content of elemental phosphorus in the composite particles improves the effect of reducing or suppressing the temperature increase inside the battery. On the other hand, if an addition amount of flame retardants such as, e.g., phosphoric acid or phosphonic acid, is increased in order to increase the content of phosphorus element, hydrophilicity of the composite particles increases, making it challenging to uniformly mix the composite particles in the slurry for forming the positive electrode mixture layer. Example embodiments includes the use of not only phosphoric acid and phosphonic acid with a large content of the phosphorus element, but also a flame retardant having hydrophobic groups such as phosphoric acid esters and phosphonic acid esters, and as a result it is possible to reduce or suppress excessive increase in hydrophilicity while increasing the content of phosphorus element. The content of hydrophobic groups in the composite particles is evaluated by the amounts of various desorbed gases from each hydrophobic group in the composite particles, and thereby the amounts of various desorbed gases may satisfy the ranges below.

When the composite particles are heated from about 80 °C to about 1400 °C, an amount of desorbed $CH_4$ gas (referred to as MS3) from the composite particles measured by TDS-MS may be equal to 0, but may also be greater than or equal to about $30 \times 10^{-6}$ mol/g and less than or equal to about $400 \times 10^{-6}$ mol/g, greater than or equal to about $40 \times 10^{-6}$ mol/g and less than or equal to about $350 \times 10^{-6}$ mol/g, or greater than or equal to about $50 \times 10^{-6}$ mol/g and less than or equal to about $300 \times 10^{-6}$ mol/g.

An amount of desorbed CHsOH (referred to as MS4) measured in the same way may be 0, but may also be greater than or equal to about $500 \times 10^{-6}$ mol/g and less than or equal to about $2500 \times 10^{-6}$ mol/g, greater than or equal to about $600 \times 10^{-6}$ mol/g and less than or equal to about $2450 \times 10^{-6}$ mol/g, or greater than or equal to about $700 \times 10^{-6}$ mol/g and less than or equal to about $2400 \times 10^{-6}$ mol/g.

If the composite particles are modified with a functional group including a phenyl group among hydrophobic groups, the composite particles may be more dispersed in the solvent when producing a slurry using a non-aqueous solvent such as N-methyl-2-pyrrolidone (NMP).

Accordingly, the amount of desorbed $C_6H_6$ (referred to as MS5) from about 80 °C to about 1400 °C as determined by TDS-MS of the above composite particles may be 0, but may also be greater than or equal to about $100 \times 10^{-6}$ mol/g and less than or equal to about $2500 \times 10^{-6}$ mol/g, greater than or equal to about $300 \times 10^{-6}$ mol/g and less than or equal to about $2400 \times 10^{-6}$ mol/g, or greater than or equal to about $600 \times 10^{-6}$ mol/g and less than or equal to about $2300 \times 10^{-6}$ mol/g.

A content of composite particles in the positive electrode mixture layer may be in the range of greater than or equal to about 0.1 wt% and less than or equal to about 5 wt%, greater than or equal to about 0.2 wt% and less than or equal to about 3 wt%, or greater than or equal to about 0.5 wt% and less than or equal to about 2 wt% based on a total weight 100 wt% of the positive electrode mixture layer. Within any of the above ranges of content of composite particles, sufficient heat reduction or suppression effect and good battery performance can be achieved.

In addition, the content of the composite particles for non-aqueous electrolyte rechargeable battery based on a total weight of the non-aqueous electrolyte rechargeable battery may vary depending on the use of the non-aqueous electrolyte rechargeable battery and is not limited to the range below, but for example, when the overall mass of the rechargeable battery is 100 wt%, the content of composite particles for non-aqueous electrolyte rechargeable batteries included in the non-aqueous electrolyte rechargeable battery may be greater than or equal to about 0.01 wt% and less than or equal to about 5.0 wt%, greater than or equal to about 0.02 wt% and less than or equal to about 2.0 wt%, or greater than or equal to about 0.1 wt% and less than or equal to about 0.5 wt%.

3. Manufacturing Method of Non-aqueous Electrolyte Rechargeable Battery According to an Example Embodiment

Hereinafter, the manufacturing method of the non-aqueous electrolyte rechargeable battery according to an example embodiment is described.

3-1. Preparing Method of Composite Particles

The composite particles for a non-aqueous electrolyte rechargeable battery according to the example embodiment can be prepared by mixing metal hydroxide particles and a flame retardant, and heating the metal hydroxide particles and flame retardant.

The mixing may be performed, for example, by dispersing metal hydroxide particles and a flame retardant in an appropriate solvent, heating the dispersion to a temperature of about 40 °C or higher and about 100 °C or lower, and carrying the reaction at the same temperature for above 1 hour or more and about 48 hours or less, and filtering the filter paper to obtain the composite particles.

The solvent may be water, or a mixture of water and an alcohol-based organic solvent such as, e.g., at least ethanol or 2-propanol.

The heating temperature may be greater than or equal to about 60 °C and less than or equal to about 80 °C, and the heating time (reaction time) may be greater than or equal to about 5 hours and less than or equal to about 30 hours.

In order to prepare the composite particles modified with more flame retardant components derived from flame retardants for metal hydroxides, it may be advantageous to use a metal hydroxide as a starting material with as a large BET specific surface area as possible and to mix the metal hydroxide with a relatively large BET specific surface area with a flame retardant to set the specific surface area of the composite particles in the above-mentioned range. The BET specific surface area of composite particles tends to decrease when the amount of flame retardant added to the metal hydroxide is increased. or when the reaction time when combining the metal hydroxide and flame retardant is lengthened. Accordingly, the BET specific surface area of the composite particles can be adjusted by changing these conditions, and thus the BET specific surface area of the metal hydroxide as the starting material is not particularly limited, but the BET specific surface area of the metal hydroxide may be, for example, greater than or equal to about 100 $m^2/g$ and less than or equal to about 500 $m^2/g$.

### 3-2. Manufacturing Method of Positive Electrode

The positive electrode may be manufactured as follows. A positive electrode slurry is formed by dispersing a mixture of a positive electrode active material, a conductive agent, a positive electrode binder, and composite particles in a desired ratio in a solvent for a positive electrode slurry. This positive electrode slurry is coated on the positive electrode current collector and dried to form a positive electrode mixture layer. In various examples, the coating method is not particularly limited. The coating method may include, e.g., a knife coater method, a gravure coater method, a reverse roll coater method, a slit die coater method, and the like. Each of the following coating processes is also performed by the same method. The positive electrode material mixture layer is pressed by a press to have a desired density. Thus, a positive electrode is manufactured.

### 3-3. Manufacturing Method of Negative Electrode

The negative electrode is also produced similarly to the positive electrode. A negative electrode slurry is prepared by dispersing a mixture of materials constituting the negative electrode mixture layer in a solvent for a negative electrode slurry. A negative electrode mixture layer is formed by coating the negative electrode slurry on the negative electrode current collector, and drying the negative electrode slurry and negative electrode current collector. The negative electrode mixture layer is pressed by a press machine so as to have a desired density. Thus, a negative electrode is manufactured.

### 3-4. Manufacturing Method of Non-aqueous Electrolyte Rechargeable Battery

An electrode structure is manufactured by placing a separator between the positive electrode and the negative electrode. The electrode structure may be processed into a desired shape (e.g., cylindrical shape, prismatic shape, laminated shape, button shape, etc.) and inserted into a container of the above shape. A non-aqueous electrolyte is inserted into the corresponding container to impregnate the electrolyte into each pore in the separator or a gap between the positive electrode and negative electrode. Accordingly, a rechargeable lithium ion battery is manufactured.

### 4. Effect by an Example Embodiment

According to the non-aqueous electrolyte rechargeable battery configured as described above, even in an environment where the internal temperature is likely to rise due to battery abnormalities such as internal short circuits, the increase in the internal temperature of the non-aqueous electrolyte rechargeable battery may be sufficiently reduced or suppressed, and additionally, deterioration of the cycle characteristics of a non-aqueous electrolyte rechargeable battery can be reduced or suppressed by including a heat reducing or suppressing additive that reduces or suppresses heat generation

Additionally, deterioration of the cycle characteristics of a non-aqueous electrolyte secondary battery can be reduced or suppressed by containing a heat reducing or suppressing additive that reduces or suppresses heat generation.

### 5. Another Example Embodiment

The present disclosure is not limited to the aforementioned example embodiments.

In the aforementioned example embodiment, the case where the positive electrode includes the composite particles according to examples of the present disclosure has been described, but the negative electrode may also include the composite particles. When including composite particles in the negative electrode, it is desirable to set the content equivalent to that in the case of including them in the positive electrode.

Additionally, the composite particles may be included in the electrolyte, or may be included in multiple locations in the positive electrode, negative electrode, and electrolyte.

When the negative electrode includes the composite particles for a non-aqueous electrolyte rechargeable battery, a content of the composite particles for a non-aqueous electrolyte rechargeable battery based on a total weight of the negative electrode may be in the same or similar range as the content of the composite particles for the positive electrode.

When the electrolyte includes the composite particles for a non-aqueous electrolyte rechargeable battery, a content of the composite particles for a non-aqueous electrolyte rechargeable battery when the mass of the total electrolyte is 100 wt% may be in the range of about 0.1 wt% to about 10.0 wt%.

In addition, the present disclosure is not limited to these example embodiments but may be variously modified without deviating from the purpose.

[Examples]

Hereinafter, the present disclosure will be described in more detail according to the following examples. However, the present invention is not limited to the following examples.

Production of Composite Particles

Example 1

As starting materials, 1.0 g of aluminum hydroxide ($D_{50}$: 3.0 $\mu$m, BET specific surface area: 205 $m^2$/g), 2.5 g of phenyl phosphate, and 2.5 g of phosphonic acid were used, and these were dispersed in 50 cc of a mixed solution of ethanol and purified water (mixing volume ratio of 1:1). This dispersion was heated at 70 °C for 24 hours, filtered with water and ethanol, washed with water and ethanol, and the solids on the filter paper were vacuum-dried to obtain Composite Particles AA.

Example 2

Composite Particles AB were obtained in the same manner as in Example 1 with a difference that 1.0 g of aluminum hydroxide ($D_{50}$: 3.0 $\mu$m, BET specific surface area: 205 $m^2$/g), 2.5 g of diphenyl phosphate, and 2.5 g of phosphonic acid were used as starting materials.

Example 3

Composite Particles AC were obtained in the same manner as in Example 1 with a difference hat 1.0 g of aluminum hydroxide ($D_{50}$: 3.0 $\mu$m, BET specific surface area: 205 $m^2$/g), 2.5 g of triphenyl phosphate, and 2.5 g of phosphonic acid were used as starting materials.

Example 4

Composite Particles AD were obtained in the same manner as in Example 1 with a difference that 1.0 g of aluminum hydroxide ($D_{50}$: 3.0 $\mu$m, BET specific surface area: 205 $m^2$/g), 2.5 g of phenylphosphonic acid, and 2.5 g of phosphonic acid were used as starting materials.

Example 5

Composite Particles AE were obtained in the same manner as in Example 1 with a difference that 1.0 g of aluminum hydroxide ($D_{50}$: 3.0 $\mu$m, BET specific surface area: 205 $m^2$/g), 2.5 g of phenylphosphonic acid, and 2.5 g of phosphoric acid were used as starting materials.

Example 6

Composite Particles AF were obtained in the same manner as in Example 1 with a difference that 1.0 g of aluminum hydroxide ($D_{50}$: 3.0 $\mu$m, BET specific surface area: 205 $m^2$/g), 2.5 g of phenylphosphonic acid, and 2.5 g of methylphosphinic acid were used as starting materials.

Example 7

Composite Particles AG were obtained in the same manner as in Example 1 with a difference that 1.0 g of aluminum hydroxide ($D_{50}$: 3.0 $\mu$m, BET specific surface area: 205 m$^2$/g), 2.5 g of phenylphosphonic acid, and 2.5 g of methylphosphonic acid were used as starting materials.

Example 8

Composite Particles BA were obtained in the same manner as in Example 1 with a difference that 1.0 g of activated alumina ($D_{50}$: 3.0 $\mu$m, BET specific surface area: 300 m$^2$/g), 2.5 g of phenyl phosphate, and 2.5 g of phosphonic acid were used as starting materials.

Example 9

Composite Particles BB were obtained in the same manner as in Example 1 with a difference that 1.0 g of activated alumina ($D_{50}$: 3.0 $\mu$m, BET specific surface area: 300 m$^2$/g), 2.5 g of diphenyl phosphate, and 2.5 g of phosphonic acid were used as starting materials.

Example 10

Composite Particles BC were obtained in the same manner as in Example 1 with a difference that 1.0 g of activated alumina ($D_{50}$: 3.0 $\mu$m, BET specific surface area: 300 m$^2$/g), 2.5 g of triphenyl phosphate, and 2.5 g of phosphonic acid were used as starting materials.

Example 11

Composite Particles BD were obtained in the same manner as in Example 1 with a difference that 1.0 g of activated alumina ($D_{50}$: 3.0 $\mu$m, BET specific surface area: 300 m$^2$/g), 2.5 g of phenylphosphonic acid, and 2.5 g of phosphonic acid were used as starting materials.

Example 12

Composite Particles BE were obtained in the same manner as in Example 1 with a difference that 1.0 g of activated alumina ($D_{50}$: 3.0 $\mu$m, BET specific surface area: 300 m$^2$/g), 2.5 g of phenylphosphonic acid, and 2.5 g of phosphoric acid were used as starting materials.

Example 13

Composite Particles BF were obtained in the same manner as in Example 1 with a difference that 1.0 g of activated alumina ($D_{50}$: 3.0 $\mu$m, BET specific surface area: 300 m$^2$/g), 2.5 g of phenylphosphonic acid, and 2.5 g of methylphosphinic acid were used as starting materials.

Example 14

Composite Particles BG were obtained in the same manner as in Example 1 with a difference that 1.0 g of activated alumina ($D_{50}$: 3.0 $\mu$m, BET specific surface area: 300 m$^2$/g), 2.5 g of phenylphosphonic acid, 2.5 g of methylphosphonic acid were used as starting materials.

Example 15

Composite Particles CA were obtained in the same manner as in Example 1 with a difference that 1.0 g of kaolinite ($Al_2Si_2O_5(OH)_4$, $D_{50}$: 1.0 $\mu$m, BET specific surface area: 120 m$^2$/g), 2.5 g of phenyl phosphate, and 2.5 g of phosphonic acid were used as starting materials.

Example 16

Composite Particles CB were obtained in the same manner as in Example 1 with a difference that 1.0 g of kaolinite ($Al_2Si_2O_5(OH)_4$, $D_{50}$: 1.0 $\mu$m, BET specific surface area: 120 m$^2$/g), 2.5 g of diphenyl phosphate, and 2.5 g of phosphonic

EP 4 510 243 A1

acid were used as starting materials.

Example 17

Composite Particles CC were obtained in the same manner as in Example 1 with a difference that 1.0 g of kaolinite ($Al_2Si_2O_5(OH)_4$, $D_{50}$: 1.0 µm, BET specific surface area: 120 $m^2/g$), 2.5 g of triphenyl phosphate, and 2.5 g of phosphonic acid were used as starting materials.

Example 18

Composite Particles CD were obtained in the same manner as in Example 1 with a difference that 1.0 g of kaolinite ($Al_2Si_2O_5(OH)_4$, $D_{50}$: 1.0 µm, BET specific surface area: 120 $m^2/g$), 2.5 g of phenylphosphonic acid, and 2.5 g of phosphonic acid were used as starting materials.

Example 19

Composite Particles CE were obtained in the same manner as in Example 1 with a difference that 1.0 g of kaolinite ($Al_2Si_2O_5(OH)_4$, $D_{50}$: 1.0 µm, BET specific surface area: 120 $m^2/g$), 2.5 g of phenylphosphonic acid, and 2.5 g of phosphoric acid were used as starting materials.

Example 20

Composite Particles CF were obtained in the same manner as in Example 1 with a difference that 1.0 g of kaolinite ($Al_2Si_2O_5(OH)_4$, $D_{50}$: 1.0 µm, BET specific surface area: 120 $m^2/g$), 2.5 g of phenylphosphonic acid, and 2.5 g of methylphosphinic acid were used as starting materials.

Example 21

Composite Particles CG were obtained in the same manner as in Example 1 with a difference that 1.0 g of kaolinite ($Al_2Si_2O_5(OH)_4$, $D_{50}$: 1.0 µm, BET specific surface area: 120 $m^2/g$), 2.5 g of phenylphosphonic acid, and 2.5 g of methylphosphonic acid were used as starting materials.

Example 22

Composite Particles DA were obtained in the same manner as in Example 1 with a difference that 1.0 g of pseudo-boehmite ($D_{50}$: 1.8 µm, BET specific surface area: 384 $m^2/g$), 2.5 g of phenyl phosphate, and 2.5 g of phosphonic acid were used as starting materials.

Example 23

Composite Particles DB were obtained in the same manner as in Example 1 with a difference that 1.0 g of pseudo-boehmite ($D_{50}$: 1.8 µm, BET specific surface area: 384 $m^2/g$), 2.5 g of diphenyl phosphate, and 2.5 g of phosphonic acid were used as starting materials.

Example 24

Composite Particles DC were obtained in the same manner as in Example 1 with a difference that 1.0 g of pseudo-boehmite ($D_{50}$: 1.8 µm, BET specific surface area: 384 $m^2/g$), 2.5 g of triphenyl phosphate, and 2.5 g of phosphonic acid were used as starting materials.

Example 25

Composite Particles DD were obtained in the same manner as in Example 1 with a difference that 1.0 g of pseudo-boehmite ($D_{50}$: 1.8 µm, BET specific surface area: 384 $m^2/g$), 2.5 g of phenylphosphonic acid, and 2.5 g of phosphonic acid were used as starting materials.

Example 26

Composite Particles DE were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of phosphoric acid were used as starting materials.

Example 27

Composite Particles DF were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of methylphosphinic acid were used as starting materials.

Example 28

Composite Particles DG were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of methylphosphonic acid were used as starting materials.

Example 29

Composite Particles DH were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 5.0 g of phosphoric acid were used as starting materials.

Example 30

Composite Particles EA were obtained in the same manner as in Example 1 with a difference that 1.0 g of pseudo-boehmite ($D_{50}$: 1.8 $\mu$m, BET specific surface area: 384 m$^2$/g), 2.5 g of phenyl phosphate, and 2.5 g of boric acid were used as starting materials.

Example 31

Composite Particles EB were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of boric acid were used as starting materials.

Example 32

Composite Particles EC were obtained in the same manner as in Example 1 with a difference that 1.0 g of pseudo-boehmite ($D_{50}$: 1.8 $\mu$m, BET specific surface area: 384 m$^2$/g), 2.5 g of phenyl phosphate, and 2.5 g of boronic acid were used as starting materials.

Example 33

Composite Particles ED were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of boronic acid were used as starting materials.

Example 34

Composite Particles FA were obtained in the same manner as in Example 1 with a difference that 1.0 g of pseudo-boehmite ($D_{50}$: 1.8 $\mu$m, BET specific surface area: 384 m$^2$/g), 2.5 g of phenyl phosphate, and 2.5 g of bromic acid were used as starting materials.

Example 35

Composite Particles FB were obtained in the same manner as in Example 1 with a difference that 1.0 g of pseudo-boehmite ($D_{50}$: 1.8 $\mu$m, BET specific surface area: 384 m$^2$/g), 2.5 g of phenylphosphonic acid, and 2.5 g of bromic acid were used as starting materials.

Comparative Example 5

Composite Particles GA were obtained in the same manner as in Example 1 with a difference that 1.0 g of aluminum hydroxide ($D_{50}$: 3.0 $\mu$m, BET specific surface area: 205 $m^2$/g) and 5.0 g of phenylphosphonic acid were used as starting materials.

Comparative Example 6

Composite Particles GB were obtained in the same manner as in Example 1 with a difference that 1.0 g of aluminum hydroxide ($D_{50}$: 3.0 $\mu$m, BET specific surface area: 205 $m^2$/g) and 5.0 g of diphenyl phosphate were used as starting materials.

Manufacturing of Positive Electrode

Examples 1 to 35 and Comparative Example 2 to 6

$LiCoO_2$, acetylene black, the composite particles, metal hydroxide particles, or flame retardant listed in Table 1 (composite particles, metal hydroxide particles, particle mixtures, or flame retardant are collectively referred to as heat reducing or suppressing additives), and polyvinylidene fluoride as a binder are dispersed and mixed in a form of dry powders (solid content) including no solvent in N-methyl-2-pyrrolidone solvent to prepare positive electrode mixture slurries. The slurry is coated on one surface or both surfaces of the aluminum current collector so that the mixture application amount (surface density) after drying is 20.0 mg/$cm^2$ on one surface, dried, and then pressed with a roll press machine so that the positive electrode mixture layer density is 4.15 g/cc to form a positive electrode mixture layer.

Comparative Example 1

A positive electrode was manufactured in the same manner as in Example 1, with a difference that $LiCoO_2$, acetylene black, and polyvinylidene fluoride were dispersed and mixed in N-methyl-2-pyrrolidone solvent in a mass ratio of 97.7:1.0:1.3 as a dry powder (solid content) including no solvent to prepare a positive electrode mixture slurry.

Manufacturing of Negative Electrode

Examples 1 to 35 and Comparative Examples 1 to 6

Artificial graphite, carboxymethyl cellulose (CMC) sodium salt, and styrene-butadiene-based water copolymer dispersion were dissolved and dispersed in an aqueous solvent so that the mass ratio as dry powder (solid content) including no solvent is 97.5:1.0:1.5, to prepare a negative electrode mixture slurry. The negative electrode mixture slurry was coated and dried on one surface or both surfaces of the copper foil, which is the negative electrode current collector, so that the mixture coating amount (surface density) after drying was 15.0 mg/$cm^2$, and then pressed with a roll press machine to manufacture a negative electrode so that the negative electrode mixture layer density is 1.65 g/cc.

Manufacture of Rechargeable Battery Cells

Examples 1 to 35 and Comparative Examples 1 to 6

A plurality of the positive electrodes and a plurality of the negative electrode were stacked with a polypropylene porous separator between the positive and negative electrodes to have battery design capacity of 300 mAh, manufacturing an electrode stack. As the positive electrode and negative electrode placed inside the electrode stack, mixture layers formed on both surfaces of the current collector were used, and for the positive electrode or negative electrode disposed on the outermost layer, a mixture layer formed on only one surface was used. For example, a positive electrode with an electrode plate area of 8.5 $cm^2$ (both surfaces on which mixture layers are formed, 5 sheets) and a negative electrode with an electrode plate area of 10.0 $cm^2$ (4 sheets of both surfaces on which mixture layers are formed and 2 sheets of one surface on which a mixture layer is formed) were manufactured. A rechargeable battery cell before the initial charge was manufactured by welding nickel and aluminum lead wires respectively to the negative and positive electrodes of the electrode stack, housing the electrode stack in an aluminum laminate film with the lead wires externally pulled out, injecting an electrolyte thereinto, and sealing the aluminum laminate film under a reduced pressure. The electrolyte was prepared by dissolving 1.3 M LiPF$_6$ and 1 mass% of vinylene carbonate in a mixed solvent of ethylene carbonate / dimethyl carbonate / fluoroethylene carbonate in a volume ratio of 15/80/5.

Evaluation of Heat Suppressing Additives

The heat suppressing additives used in Examples and Comparative Examples were evaluated as follows.

Element Analysis

Quantitative analyses were made in accordance with JIS K0116:2014 using an inductively coupled plasma emission spectroscopic analyzer (ICP-AES, Agilent Technology Co., Ltd., Agilent 5110 VDV type), and the Al element, P element, B element, and Br element included in the composite particles, metal hydroxide particles, or radical supplement.

BET Specific Surface Area

The specific surface area (BET specific surface area calculated based on the adsorption isotherm measured by adsorbing water vapor) of the metal hydroxide particles or composite particles was measured using a gas adsorption amount measuring device (Microtrack, BELSORP), according to JIS K6217-2.

Amount of Desorbed Gas

Thermal desorption gas mass spectrometry (TDS-MS) was conducted by using a thermal desorption gas mass spectrometer (TDS-1200, ESCO, Ltd.) to measure and analyze each desorbed amount of methane (CH$_4$) molecules, methanol (CHsOH) molecules, benzene (C$_6$H$_6$) molecules, diphosphorus (P$_2$) molecules, and water (H$_2$O) molecules, as follows.

In TDS, the negative electrode active materials were set by using a sample stage made of quartz and a sample dish made of SiC. In addition, the temperature increase rate was 60 °C/min. The temperature increase was controlled by monitoring a temperature on the sample surface. Furthermore, a weight of the sample was 1 mg, which was corrected by an actual weight. A quadruple mass spectrometer was used for detection, and a voltage applied thereto was 1000 V.

TDS was used to measure an amount ($\mu$mol/g) of each gas desorbed from the metal hydroxide particles or composite particles during the temperature increase from 80 °C to 1400° C. The mass number [M/z] used for analyzing the measurements was 16 for CH$_4$, 18 for H$_2$O, 32 for CH$_3$OH, 62 for P$_2$, and 78 for C$_6$H$_6$, wherein gases corresponding to the mass numbers were all each of the aforementioned substances. Herein, regarding the gas amount of H$_2$O, an integrated value only from 80 °C to 200 °C out of the entire temperature range was used to obtain the amount of the desorbed H$_2$O (MS2).

Evaluation of Particle Diameter

The particle diameters of the composite particles or metal hydroxide particles were evaluated as D$_{50}$, 50% of the integrated value of the particle size distribution based on the particle diameter volume in the particle size distribution obtained by laser diffraction/scattering method. D$_{50}$ was measured using the following equipment and conditions.

Measuring device: Laser diffraction/scattering particle diameter distribution measuring device MT3300 (manufactured by Micro Track Bell)

Transparency: transparent
Shape: Non-spherical
Circulation speed: 7
Measurement time: 30 seconds
Number of repetitions: 3
Refractive index:

    a. composite particles, metal hydroxide particles, or particle mixture: 1.65
    b. ethanol solvent: 1.36

Evaluation of Rechargeable Battery Cells

Cycle Characteristics

The rechargeable battery cells according to Examples 1 to 35 and Comparative Examples 1 to 6 were charged under a constant current to 4.4 V at 0.1 CA of design capacity and charged under a constant voltage to 0.05 CA still at 4.4 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.4 V and a discharge cut-off voltage of 3.0 V in the 25 °C thermostat. The rechargeable battery cells were 200 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 200 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 200 cycles.

Heating Test

The rechargeable battery cells according to Examples 1 to 35 and Comparative Examples 1 to 6 were charged under a constant current to 4.4 V at design capacity of 0.1 CA and charged under a constant voltage at 4.4 V to 0.05 CA in the 25 °C thermostat. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.4 V and a discharge cut-off voltage of 3.0 V as 1 cycle, the cells were charged again under a constant current/constant voltage to 4.4 V, which were regarded as initial cells. These rechargeable battery cells were left for 1 hour in a thermostat heated to 165 °C, and a case where a voltage of a battery cell became 4.2 V or less was regarded as "abnormal occurrence," and an abnormal occurrence rate was evaluated in the 10 battery tests.

Nail Penetration Test

A nail penetration test was conducted by penetrating the aforementioned initial cells in the center with a nail having a diameter of 3 mm at 1 mm/s. A case where an external temperature of a battery cell reached 50 °C or higher 5 seconds after penetrated with the nail was regarded as "abnormal occurrence," and an abnormal occurrence rate was evaluated in the 10 battery tests.

Overcharge Test

A case where an external temperature of a battery cell reached 50 °C or higher after additionally charging the aforementioned initial cells under a constant current to 12 V at 3 CA and then, charging them under a constant voltage for 10 minutes after reaching 12 V was regarded as "abnormal occurrence," an abnormal occurrence rate was evaluated in the 10 battery tests.

Evaluation Results

The types and physical properties of the heat suppressing additives used in the examples and the comparative examples described above are shown in Table 1. In addition, the evaluation results for the rechargeable battery cells of Examples 1 to 35 and Comparative Examples 1 to 6 are summarized in Table 2.

(Table 1)

| | Heat suppressing additive | Composite particle material: metal hydroxide particle | | | Element content of composite particle | | | | | $D_{50}$ of composite particles ($\mu$m) | Specific surface area of composite particles ($m^2/g$) | Desorbed gas mass | | | | | |
|---|---|---|---|---|---|---|---|---|---|---|---|---|---|---|---|---|---|
| | | Metal hydroxide particle | $D_{50}$ ($\mu$m) | Specific surface area ($m^2/g$) | Al (wt %) | P (wt %) | B (wt %) | Br (wt %) | P+ B+ Br (wt %) | | | MS1 ($\mu$mol/g) | MS2 ($\mu$mol/g) | Ratio of the amounts of desorbed gases (-) | MS3 ($\mu$mol/g) | MS4 ($\mu$mol/g) | MS5 ($\mu$mol/g) |
| Ex. 1 | composite particle AA | aluminum hydroxide | 3.0 | 205.0 | 11 | 23 | 0 | 0 | 23 | 8.5 | 73 | 1434 | 896 | 1.6 | 103 | 856 | 712 |
| Ex. 2 | composite particle AB | aluminum hydroxide | 3.0 | 205.0 | 9 | 20 | 0 | 0 | 20 | 7.1 | 66 | 1153 | 810 | 1.4 | 210 | 1612 | 1464 |
| Ex. 3 | composite particle AC | aluminum hydroxide | 3.0 | 205.0 | 8 | 19 | 0 | 0 | 19 | 6.3 | 62 | 1085 | 761 | 1.4 | 287 | 2345 | 2243 |
| Ex. 4 | composite particle AD | aluminum hydroxide | 3.0 | 205.0 | 9 | 21 | 0 | 0 | 21 | 6.7 | 64 | 1123 | 785 | 1.4 | 100 | 815 | 736 |
| Ex. 5 | composite particle AE | aluminum hydroxide | 3.0 | 205.0 | 8 | 20 | 0 | 0 | 20 | 2.8 | 46 | 1257 | 565 | 2.2 | 104 | 821 | 738 |
| Ex. 6 | composite particle AF | aluminum hydroxide | 3.0 | 205.0 | 9 | 20 | 0 | 0 | 20 | 1.5 | 42 | 1132 | 515 | 2.2 | 145 | 789 | 729 |
| Ex. 7 | composite particle AG | aluminum hydroxide | 3.0 | 205.0 | 10 | 20 | 0 | 0 | 20 | 1.3 | 38 | 1165 | 466 | 2.5 | 138 | 802 | 746 |
| Ex. 8 | composite particle BA | activated alumina | 3.0 | 300.0 | 11 | 23 | 0 | 0 | 23 | 8.3 | 72 | 1465 | 884 | 1.7 | 105 | 862 | 725 |
| Ex. 9 | composite particle BB | activated alumina | 3.0 | 300.0 | 9 | 20 | 0 | 0 | 20 | 7.6 | 70 | 1087 | 859 | 1.3 | 215 | 1632 | 1454 |
| Ex. 10 | composite particle BC | activated alumina | 3.0 | 300.0 | 8 | 19 | 0 | 0 | 19 | 61 | 63 | 1136 | 773 | 1.5 | 293 | 2365 | 2253 |
| Ex. 11 | composite particle BD | activated alumina | 3.0 | 300.0 | 9 | 21 | 0 | 0 | 21 | 45 | 58 | 1154 | 712 | 1.6 | 107 | 826 | 745 |

| | Heat suppressing additive | Composite particle material: metal hydroxide particle | | | Element content of composite particle | | | | | $D_{50}$ of composite particles ($\mu m$) | Specific surface area of composite particles ($m^2/g$) | Desorbed gas mass | | | | | |
|---|---|---|---|---|---|---|---|---|---|---|---|---|---|---|---|---|---|
| | | Metal hydroxide particle | $D_{50}$ ($\mu m$) | Specific surface area ($m^2/g$) | Al (wt %) | P (wt %) | B (wt %) | Br (wt %) | P+ B+ Br (wt %) | | | MS1 ($\mu mol/g$) | MS2 ($\mu mol/g$) | Ratio of the amounts of desorbed gases (-) | MS3 ($\mu mol/g$) | MS4 ($\mu mol/g$) | MS5 ($\mu mol/g$) |
| Ex. 12 | composite particle BE | activated alumina | 3.0 | 300.0 | 8 | 20 | 0 | 0 | 20 | 38 | 52 | 1276 | 638 | 2.0 | 111 | 834 | 746 |
| Ex. 13 | composite particle BF | activated alumina | 3.0 | 300.0 | 9 | 20 | 0 | 0 | 20 | 1.9 | 45 | 1098 | 552 | 2.0 | 157 | 805 | 738 |
| Ex. 14 | composite particle BG | activated alumina | 3.0 | 300.0 | 10 | 20 | 0 | 0 | 20 | 1.6 | 43 | 1125 | 528 | 2.1 | 146 | 817 | 760 |
| Ex. 15 | composite particle CA | kaolinite | 1.0 | 120.0 | 11 | 25 | 0 | 0 | 25 | 3.5 | 65 | 1750 | 798 | 2.2 | 94 | 834 | 697 |
| Ex. 16 | composite particle CB | kaolinite | 1.0 | 120.0 | 9 | 20 | 0 | 0 | 20 | 33 | 63 | 1178 | 773 | 1.5 | 198 | 1546 | 1376 |
| Ex. 17 | composite particle CC | kaolinite | 1.0 | 120.0 | 8 | 19 | 0 | 0 | 19 | 3.4 | 65 | 1154 | 798 | 1.4 | 294 | 2231 | 2042 |
| Ex. 18 | composite particle CD | kaolinite | 1.0 | 120.0 | 9 | 21 | 0 | 0 | 21 | 3.8 | 65 | 1139 | 798 | 1.4 | 91 | 784 | 701 |
| Ex. 19 | composite particle CE | kaolinite | 1.0 | 120.0 | 8 | 20 | 0 | 0 | 20 | 2.5 | 52 | 1267 | 638 | 2.0 | 90 | 793 | 714 |
| Ex. 20 | composite particle CF | kaolinite | 1.0 | 120.0 | 9 | 19 | 0 | 0 | 19 | 1.9 | 45 | 1114 | 552 | 2.0 | 125 | 764 | 703 |
| Ex. 21 | composite particle CG | kaolinite | 1.0 | 120.0 | 10 | 19 | 0 | 0 | 19 | 2.0 | 48 | 1141 | 589 | 1.9 | 117 | 774 | 724 |
| Ex. 22 | composite particle DA | pseudo-boehmite | 1.8 | 384.0 | 11 | 24 | 0 | 0 | 24 | 4.5 | 61 | 1604 | 749 | 2.1 | 115 | 871 | 725 |

| | Heat suppressing additive | Composite particle material: metal hydroxide particle | | | Element content of composite particle | | | | | $D_{50}$ of composite particles ($\mu$m) | Specific surface area of composite particles ($m^2/g$) | Desorbed gas mass | | | | | |
|---|---|---|---|---|---|---|---|---|---|---|---|---|---|---|---|---|---|
| | | Metal hydroxide particle | $D_{50}$ ($\mu$m) | Specific surface area ($m^2/g$) | Al (wt %) | P (wt %) | B (wt %) | Br (wt %) | P+ B+ Br (wt %) | | | MS1 ($\mu$mol/g) | MS2 ($\mu$mol/g) | Ratio of the amounts of desorbed gases (-) | MS3 ($\mu$mol/g) | MS4 ($\mu$mol/g) | MS5 ($\mu$mol/g) |
| Ex. 23 | composite particle DB | pseudo-boehmite | 1.8 | 384.0 | 9 | 20 | 0 | 0 | 20 | 42 | 56 | 1111 | 687 | 1.6 | 226 | 1645 | 1486 |
| Ex. 24 | composite particle DC | pseudo-boehmite | 1.8 | 384.0 | 8 | 19 | 0 | 0 | 19 | 3.8 | 52 | 1078 | 638 | 1.7 | 293 | 2389 | 2278 |
| Ex. 25 | composite particle DD | pseudo-boehmite | 1.8 | 384.0 | 9 | 21 | 0 | 0 | 21 | 3.9 | 45 | 1141 | 552 | 2.1 | 114 | 845 | 749 |
| Ex. 26 | composite particle DE | pseudo-boehmite | 1.8 | 384.0 | 8 | 20 | 0 | 0 | 20 | 3.1 | 30 | 1247 | 368 | 3.4 | 121 | 836 | 752 |
| Ex. 27 | composite particle DF | pseudo-boehmite | 1.8 | 384.0 | 9 | 19 | 0 | 0 | 19 | 2.4 | 35 | 1144 | 430 | 2.7 | 164 | 812 | 743 |
| Ex. 28 | composite particle DG | pseudo-boehmite | 1.8 | 384.0 | 10 | 19 | 0 | 0 | 19 | 1.8 | 28 | 1178 | 344 | 3.4 | 156 | 826 | 759 |
| Ex. 29 | composite particle DH | pseudo-boehmite | 1.8 | 384.0 | 8 | 20 | 0 | 0 | 20 | 0.1 | 31 | 1297 | 380 | 3.4 | 212 | 965 | 843 |
| Ex. 30 | composite particle EA | pseudo-boehmite | 1.8 | 384.0 | 11 | 9 | 11 | 0 | 20 | 32 | 56 | 635 | 748 | 0.8 | 94 | 756 | 888 |
| Ex. 31 | composite particle EB | pseudo-boehmite | 1.8 | 384.0 | 10 | 10 | 12 | 0 | 22 | 3.5 | 52 | 712 | 578 | 12 | 97 | 791 | 840 |
| Ex. 32 | composite particle EC | pseudo-boehmite | 1.8 | 384.0 | 11 | 12 | 8 | 0 | 20 | 3.4 | 53 | 643 | 719 | 0.9 | 88 | 816 | 821 |
| Ex. 33 | composite particle ED | pseudo-boehmite | 1.8 | 384.0 | 10 | 13 | 7 | 0 | 20 | 3.8 | 49 | 705 | 534 | 1.3 | 90 | 804 | 834 |

| | Heat suppressing additive | Composite particle material: metal hydroxide particle | | | Element content of composite particle | | | | | D$_{50}$ of composite particles ($\mu$m) | Specific surface area of composite particles (m$^2$/g) | Desorbed gas mass | | | | | |
|---|---|---|---|---|---|---|---|---|---|---|---|---|---|---|---|---|---|
| | | Metal hydroxide particle | D$_{50}$ ($\mu$m) | Specific surface area (m$^2$/g) | Al (wt %) | P (wt %) | B (wt %) | Br (wt %) | P+ B+ Br (wt %) | | | MS1 ($\mu$mol/g) | MS2 ($\mu$mol/g) | Ratio of the amounts of desorbed gases (-) | MS3 ($\mu$mol/g) | MS4 ($\mu$mol/g) | MS5 ($\mu$mol/g) |
| Ex. 34 | composite particle FA | pseudo-boehmite | 1.8 | 384.0 | 8 | 11 | 0 | 8 | 19 | 4.5 | 50 | 654 | 764 | 0.9 | 102 | 806 | 851 |
| Ex. 35 | composite particle FB | pseudo-boehmite | 1.8 | 384.0 | 9 | 12 | 0 | 7 | 19 | 3.2 | 45 | 711 | 637 | 1.1 | 131 | 786 | 836 |
| Comp. Ex. 1 | | | | | | | | | | | | | | | | | |
| Comp. Ex. 2 | aluminum hydroxide particle | aluminum hydroxide particle | 3.0 | 205.0 | 32 | 0 | 0 | 0 | 0 | 3.0 | 205 | 0 | 60 | 0.0 | 0 | 0 | 0 |
| Comp. Ex. 3 | pseudo-boehmite particle | pseudo-boehmite particle | 1.8 | 384.0 | 32 | 0 | 0 | 0 | 0 | 1.8 | 384 | 0 | 1885 | 0.0 | 0 | 0 | 0 |
| Comp. Ex. 4 | phosphoric acid diphenyl | - | - | - | 0 | 12 | 0 | 0 | 12 | - | - | 765 | 0 | - | 418 | 3102 | 2950 |
| Comp. Ex. 5 | composite particle GA | aluminum hydroxide | 3.0 | 205.0 | 7 | 16 | 0 | 0 | 16 | 2.4 | 45 | 875 | 725 | 1.2 | 204 | 1632 | 1538 |
| Comp. Ex. 6 | composite particle GB | aluminum hydroxide | 3.0 | 205.0 | 7 | 15 | 0 | 0 | 15 | 21 | 42 | 564 | 653 | 0.9 | 411 | 2965 | 2854 |

(Table 2)

|  | Discharge capacity retention rate after 200 cycles (%) | Heating test abnormal occurrence (%) | Nail penetration test abnormal occurrence (%) | Overcharge test abnormal occurrence (%) |
|---|---|---|---|---|
| Ex. 1 | 90.2 | 0 | 20 | 10 |
| Ex. 2 | 90.1 | 0 | 10 | 10 |
| Ex. 3 | 90.3 | 0 | 20 | 20 |
| Ex. 4 | 90.2 | 0 | 20 | 10 |
| Ex. 5 | 90.1 | 0 | 0 | 0 |
| Ex. 6 | 90.1 | 0 | 10 | 10 |
| Ex. 7 | 90.1 | 0 | 10 | 10 |
| Ex. 8 | 90.0 | 0 | 10 | 10 |
| Ex. 9 | 90.2 | 0 | 20 | 20 |
| Ex. 10 | 90.2 | 0 | 20 | 20 |
| Ex. 11 | 90.1 | 0 | 10 | 0 |
| Ex. 12 | 90.2 | 0 | 0 | 0 |
| Ex. 13 | 90.3 | 0 | 20 | 10 |
| Ex. 14 | 90.1 | 0 | 20 | 20 |
| Ex. 15 | 90.0 | 0 | 10 | 10 |
| Ex. 16 | 90.2 | 0 | 20 | 20 |
| Ex. 17 | 90.1 | 0 | 20 | 20 |
| Ex. 18 | 90.2 | 0 | 10 | 0 |
| Ex. 19 | 90.3 | 0 | 0 | 0 |
| Ex. 20 | 90.1 | 0 | 20 | 10 |
| Ex. 21 | 90.3 | 0 | 20 | 10 |
| Ex. 22 | 90.2 | 0 | 0 | 10 |
| Ex. 23 | 90.2 | 0 | 20 | 10 |
| Ex. 24 | 90.2 | 0 | 20 | 10 |
| Ex. 25 | 90.2 | 0 | 10 | 0 |
| Ex. 26 | 90.1 | 0 | 0 | 0 |
| Ex. 27 | 90.2 | 0 | 20 | 10 |
| Ex. 28 | 90.3 | 0 | 10 | 10 |
| Ex. 29 | 90.0 | 0 | 0 | 0 |
| Ex. 30 | 90.0 | 0 | 20 | 10 |
| Ex. 31 | 90.1 | 0 | 0 | 0 |
| Ex. 32 | 90.0 | 0 | 20 | 20 |
| Ex. 33 | 90.1 | 0 | 0 | 10 |
| Ex. 34 | 90.0 | 0 | 20 | 20 |
| Ex. 35 | 90.1 | 0 | 0 | 0 |
| Comp. Ex. 1 | 90.2 | 100 | 100 | 100 |
| Comp. Ex. 2 | 87.2 | 70 | 100 | 90 |
| Comp. Ex. 3 | 86.5 | 70 | 80 | 90 |

(continued)

|  | Discharge capacity retention rate after 200 cycles (%) | Heating test abnormal occurrence (%) | Nail penetration test abnormal occurrence (%) | Overcharge test abnormal occurrence (%) |
|---|---|---|---|---|
| Comp. Ex. 4 | 85.8 | 80 | 80 | 100 |
| Comp. Ex. 5 | 90.2 | 0 | 40 | 30 |
| Comp. Ex. 6 | 90.1 | 0 | 40 | 30 |

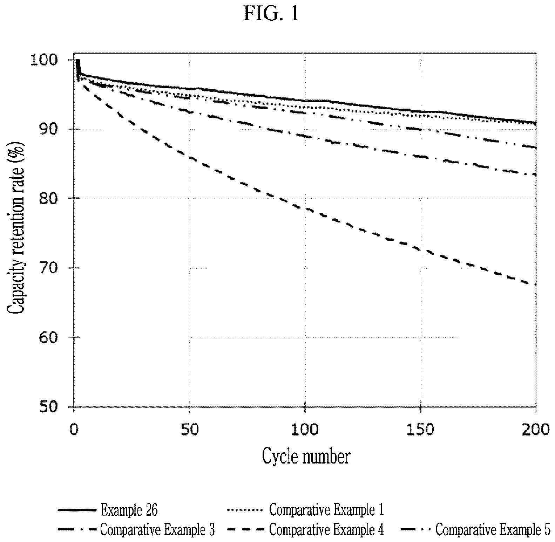

A graph of the discharge capacity retention rates for the rechargeable battery cells manufactured in Example 26, Comparative Example 1, and Comparative Examples 3 to 5 shown in Tables 1 and 2, is shown in FIG. 1.

Confirmation of Exothermic Behavior under Coexistence of Charged Positive Electrode and Electrolyte

The initial cells of the fully charged rechargeable battery cells manufactured in Example 26 and Comparative Example 1, and Comparative Examples 3 to 5 shown in Table 1 and Table 2, were disassembled in a glove box, and the positive electrodes were washed with dimethyl carbonate solvent and dried, and the obtained positive electrodes were used as a "charged positive electrode."

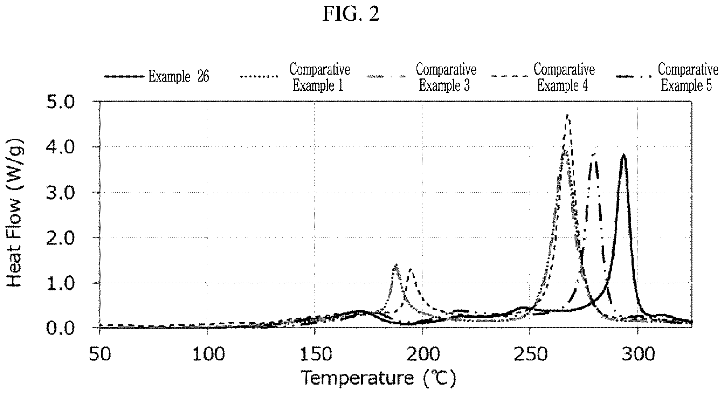

2.0 mg of the "charged positive electrode" and 1.0 mg of the same electrolyte used when manufacturing the rechargeable battery cell were placed in a special airtight container, caulked, and then using a differential scanning calorimetry device, DSC (manufactured by Hitachi High-Tech Science), the temperature was raised at a temperature increase rate of 5 K/min in accordance with the provisions of JISK7121, and the exothermic behavior was evaluated. The results are shown in FIG. 2.

Review on Examples and Comparative Examples

From the results in Table 2, in Examples 1 to 35, even under conditions where the internal temperature of the battery is likely to rise, such as high voltage charge under high temperature conditions, external impact from nailing, or overcharging, the abnormal occurrence rate caused by temperature rise inside the battery could be sufficiently reduced or suppressed. This effect is also shown by the substantial disappearance of the exothermic peak between 150 °C and 250 °C in the exothermic behavior illustrated in FIG. 2.

In contrast, in Comparative Example 1, which does not include a heat suppressing additive, in Comparative Examples 2 to 4, which include only either a metal hydroxide or a flame retardant, and in Comparative Examples 5 and 6, which include composite particles combining a metal hydroxide and a flame retardant, but the content of phosphorus element, or a sum of the contents of phosphorus element and boron element or bromine element, in the particles was less than 18 wt%, the abnormal occurrence rates (i.e., nail penetration test abnormal occurrence rates) exceeded 40%. On the other hand, in each Example, two types of flame retardants are added in equal amounts, but it is not limited to this form, and If a content of phosphorus element, a sum amount of phosphorus element and boron element or bromine element in the composite particles are greater than or equal to about 18 wt% and less than or equal to about 30 wt%, the effect of the present disclosure could be exhibited.

Furthermore, from the results in Table 2 and FIG. 1, in Comparative Examples 2 to 4, the cycle characteristics may be lowered by including various heat suppressing additives compared to Comparative Example 1 which did not contain the heat suppressing additive, but In Examples 1 to 35, the substantially same cycle characteristics as Comparative Example 1 can be maintained.

While this disclosure has been described in connection with what is presently considered to be practical example embodiments, it is to be understood that the disclosure is not limited to the disclosed example embodiments. On the contrary, it is intended to cover various modifications and equivalent arrangements included within the spirit and scope of the appended claims.

**Claims**

1. Composite particles for a non-aqueous electrolyte rechargeable battery, the composite particles comprising:

    a metal hydroxide and a flame retardant component,
    wherein the flame retardant component includes at least one of phosphorus, phosphorus and boron, and phosphorus element and bromine, and
    one of a content of the phosphorus, a sum of the contents of the phosphorus and the boron, and a sum of the contents of the phosphorus and the bromine is greater than or equal to about 18 wt% and less than or equal to about 30 wt% based on 100 wt% of the composite particles.

2. The composite particles as claimed in claim 1, wherein

an amount of desorbed $P_2$ (MS1) of the composite particles from about 80 °C to about 1400 °C is greater than or equal to about $600 \times 10^{-6}$ mol/g and less than or equal to about $2000 \times 10^{-6}$ mol/g; and
an amount of desorbed $H_2O$ (MS2) from about 80 °C to about 200 °C of the composite particle is greater than or equal to about $50 \times 10^{-6}$ mol/g and less than or equal to about $1000 \times 10^{-6}$ mol/g.

3. The composite particles as claimed in claim 1 or 2, wherein

an amount of desorbed $CH_4$ (MS3) of the composite particles from about 80 °C to about 1400 °C is greater than or equal to about $30 \times 10^{-6}$ mol/g and less than or equal to about $400 \times 10^{-6}$ mol/g;
an amount of desorbed CHsOH (MS4) of the composite particles from about 80 °C to about 1400 °C is greater than or equal to about $500 \times 10^{-6}$ mol/g and less than or equal to about $2500 \times 10^{-6}$ mol/g; and
an amount of desorbed $C_6H_6$ (MS5) of the composite particles from about 80 °C to about 1400 °C is greater than or equal to about $100 \times 10^{-6}$ mol/g and less than or equal to about $2500 \times 10^{-6}$ mol/g.

4. The composite particles as claimed in any of the claims 1 to 3, wherein
a ratio of the amounts of desorbed gases satisfies Formula (1):

$$0.6 \leq (MS1/MS2) \leq 10.0 \quad \ldots (1).$$

5. The composite particles as claimed in any of the claims 1 to 3, wherein
a BET specific surface area of the composite particles is greater than or equal to about 8 m$^2$/g and less than or equal to about 80 m$^2$/g.

6. The composite particles as claimed in any of the claims 1 to 3, wherein
an integrated value of 50% ($D_{50}$) of the volume-based particle size distribution of the composite particles is greater than or equal to about 0.05 $\mu$m and less than or equal to about 10 $\mu$m.

7. The composite particles as claimed in any of the claims 1 to 3, wherein
the metal hydroxide comprises at least one of aluminum hydroxide, pseudo-boehmite, boehmite, activated alumina, and kaolinite.

8. The composite particles as claimed in any of the claims 1 to 3, wherein
an aluminum content is greater than or equal to about 1 wt% and less than or equal to about 30 wt% based on 100 wt% of the composite particles.

9. A positive electrode for a non-aqueous electrolyte rechargeable battery, the positive electrode comprising:

a positive electrode current collector and a positive electrode mixture layer on the positive electrode current collector,
wherein the positive electrode mixture layer includes a positive electrode active material and the composite particles as claimed in any of the claims 1 to 8.

10. A non-aqueous electrolyte rechargeable battery, comprising:

a positive electrode, a negative electrode, a separator, and a non-aqueous electrolyte,
wherein the positive electrode is the positive electrode as claimed in claim 9.

11. A method of preparing composite particles for a non-aqueous electrolyte rechargeable battery, the method comprising:

mixing metal hydroxide particles and a flame retardant; and
heating the mixed metal hydroxide particles and flame retardant to prepare the composite particles as claimed in any of the claims 1 to 8.

FIG. 1

FIG. 2

Europäisches
Patentamt

European
Patent Office

Office européen
des brevets

## EUROPEAN SEARCH REPORT

Application Number

EP 24 19 4505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 404 309 A1 (SAMSUNG SDI CO LTD [KR]) 24 July 2024 (2024-07-24) * abstract * * table 1 * * example 1 * | 1,2,4-11 | INV. H01M4/62 H01M10/42 |
| X,P | EP 4 407 705 A1 (SAMSUNG SDI CO LTD [KR]) 31 July 2024 (2024-07-31) * abstract * * table 1 * * example 1 * | 1,2,4-11 | |
| X | BOZKURT AYHAN ET AL: "Proton conductivity and structural properties of nanocomposites based on boehmite incorporated poly(vinlyphosphonic acid)", IONICS, KIEL, DE, vol. 25, no. 10, 12 May 2019 (2019-05-12), pages 4831-4840, XP036903204, ISSN: 0947-7047, DOI: 10.1007/S11581-019-03036-Y [retrieved on 2019-05-12] * abstract * * page 4832, left-hand column, paragraph fourth * * section Preparation * * section TEM analysis * | 1-4,6-8, 11 | |

TECHNICAL FIELDS
SEARCHED (IPC)

H01M

-/--

The present search report has been drawn up for all claims

| Place of search | Date of completion of the search | Examiner |
|---|---|---|
| The Hague | 2 January 2025 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 19 4505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MA TENG-KUN ET AL: "Synergistic Flame Retardancy of Microcapsules Based on Ammonium Polyphosphate and Aluminum Hydroxide for Lithium-Ion Batteries", ACS OMEGA, vol. 6, no. 33, 11 August 2021 (2021-08-11), pages 21227-21234, XP093232960, US ISSN: 2470-1343, DOI: 10.1021/acsomega.1c00598 Retrieved from the Internet: URL:https://pubs.acs.org/doi/pdf/10.1021/acsomega.1c00598> * abstract * * section 4.1 Synthesis of Microcapsule Flame Retardants * * figure 2 * ----- | 1-4,6-11 | |
| T | Aladdin: "Certificate of Analysis Ammonium Polyphosphate", , 10 October 2023 (2023-10-10), XP093232963, Retrieved from the Internet: URL:https://ald-pub-files.oss-cn-shanghai.aliyuncs.com/aladdinsci/pdp/coa/1/A189185-J2307074_ce8078eee7711095730cffb2c0b5009f.pdf * the whole document * ----- | | **TECHNICAL FIELDS SEARCHED (IPC)** |
| A | CN 106 558 701 A (SHENZHEN OPTIMUM BATTERY CO) 5 April 2017 (2017-04-05) * abstract * ----- | 1-11 | |

The present search report has been drawn up for all claims

| Place of search | Date of completion of the search | Examiner |
|---|---|---|
| The Hague | 2 January 2025 | Rosciano, Fabio |

EPO FORM 1503 03.82 (P04C01)

## ANNEX TO THE EUROPEAN SEARCH REPORT
## ON EUROPEAN PATENT APPLICATION NO.

EP 24 19 4505

This annex lists the patent family members relating to the patent documents cited in  the above-mentioned European search report.
The members are as contained in the European Patent Office EDP file on
The European Patent Office is in no way liable for these particulars which are merely given for the purpose of information.

02-01-2025

| Patent document cited in search report | | Publication date | Patent family member(s) | | Publication date |
|---|---|---|---|---|---|
| EP 4404309 | A1 | 24-07-2024 | EP | 4404309 A1 | 24-07-2024 |
| | | | JP | 2024101616 A | 30-07-2024 |
| | | | KR | 20240115198 A | 25-07-2024 |
| | | | US | 2024243296 A1 | 18-07-2024 |
| EP 4407705 | A1 | 31-07-2024 | EP | 4407705 A1 | 31-07-2024 |
| | | | JP | 2024101606 A | 30-07-2024 |
| | | | KR | 20240115197 A | 25-07-2024 |
| | | | US | 2024243254 A1 | 18-07-2024 |
| CN 106558701 | A | 05-04-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023131857 A
- KR 1020240055545
- JP 2011159484 A
- JP 2016162528 A
- JP 2011258481 A